# FASCICULE DE BREVET EUROPEEN

(11) **EP 0 540 635 B1**
(45) Date de publication et mention de la délivrance du brevet: **04.11.1998**
(21) Numéro de dépôt: 91914001.2
(22) Date de dépôt: 24.07.1991
(51) Int. Cl.: B01D 53/94, B01J 23/00

(54) **CATALYSEURS DE POST-COMBUSTION**
KATALYSATOREN ZUR NACHVERBRENNUNG
POST-COMBUSTION CATALYSTS

(30) Priorité: 25.07.1990 FR 9009502
(43) Date de publication de la demande: 12.05.1993
(73) Titulaire: SPECIALITES ET TECHNIQUES EN TRAITEMENTS DE SURFACE-STTS, 60240 Fleury (FR)
(72) Inventeur: MONCEAUX, Laurence, Annie, F-60750 Choisy-au-Bac (FR); COURTINE, Pierre, Eugène, F-60200 Compiègne (FR); XIAN, Hua, F-60200 Compiègne (FR); SRI RAHAYU, W., Résidence du Clos-des-Rosses, F-60200 Compiègne iègne (FR)
(74) Mandataire: Ahner, Francis
(86) Numéro de dépôt international: FR9100609
(87) Numéro de publication internationale: WO9201505

(56) Documents cités:
- EP-A- 0 255 625
- EP-A- 0 337 730
- WO-A-89/05186
- US-A- 4 049 583

## Description

La présente invention concerne les catalyseurs de post-combustion pour le traitement des gaz de combustion.

Les catalyseurs utilisés pour la dépollution des gaz d'échappement peuvent être classés en deux catégories:
- les catalyseurs d'oxydation totale qui convertissent le monoxyde de carbone en dioxyde de carbone et les hydrocarbures en dioxyde de carbone et vapeur d'eau;
- les catalyseurs trois voies permettant à la fois d'oxyder le monoxyde de carbone et les hydrocarbures et de réduire les oxydes d'azote en azote.

Pour le traitement des gaz d'échappement, les catalyseurs actuellement employés sont constitués de métaux précieux dispersés le plus finement possible sur une couche d'alumine stabilisée possédant une grande surface spécifique, elle-même recouvrant un nid d'abeille en cordiérite. Ces catalyseurs ont de bonnes performances à l'état neuf mais vieillissent mal du fait du frittage des métaux précieux et de la transformation de l'alumine.

On peut constater soit la formation de solutions solides, soit une ségrégation des métaux à l'intérieur ou à l'extérieur des grains, soit un gradient de concentration d'un des métaux du coeur du grain vers la périphérie, selon les modes de préparation. Ces phénomènes sont difficilement contrôlables au niveau de la fabrication industrielle.

L'ensemble de ces phénomènes induit une baisse de surface spécifique et d'activité. De plus, ce type de catalyseur contient des métaux précieux en quantité non négligeable à un prix de revient élevé.

La présente invention a pour but de remédier à ces inconvénients.

La présente invention a pour objet des catalyseurs pour le traitement des gaz d'échappement contenant de la suie de moteurs diesel, comportant une phase active du type perovskite répond à la formule générale :

La_{0,8} Sr_{0,2} Mn_{y} M'_{z} Φ_{1-y-z} 0₃

dans laquelle :
M' représente au moins un métal choisi parmi Pt, Ru, Pd ou Rh,
Φ représente une lacune cationique, et
   0,85 < y ≤ 1; 0 ≤ z < 0,08, avec 0,85 < y + z ≤ 1.

Les catalyseurs selon l'invention peuvent être utilisés pour le traitement des gaz de combustion d'origines diverses. Ainsi, ils sont utiles par exemple pour le traitement des gaz de combustion issus de chaudières au fioul ou de moteurs à combustion interne.

Les catalyseurs selon l'invention répondant à la formule (I) sont particulièrement efficaces pour l'épuration des gaz d'échappement des moteurs diesel, notamment pour l'élimination des suies. Les courbes résultant d'analyses thermogravimétriques et d'analyses thermodifférentielles montrent que, dans le cas de suies, seule la courbe ATD est constituée de signaux successifs, ce qui tend à prouver que la combustion est imparfaite et sporadique alors que dans le cas de suies au contact du catalyseur, le signal est unique et de grande intensité, preuve d'une combustion bien meilleure et donc d'un effet catalytique certain. L'utilisation de catalyseurs selon l'invention permet en outre de diminuer notablement la température d'ignition des suies et l'écart entre la température d'ignition et la température de fin de combustion.

Les catalyseurs selon l'invention sont efficaces pour le traitement des composés gazeux des gaz d'échappement, qu'il s'agisse des composés gazeux (oxyde de carbone, hydrocarbures ou oxydes d'azote) constituant les gaz d'échappement proprement dits des moteurs à combustion interne, ou des oxydes de carbone résultant de la combustion des suies.

Dans ce cas on utilise de préférence un catalyseur selon l'invention contenant simultanément au moins un métal noble et une lacune cationique.

La présence de la lacune cationique permet d'avoir des atomes d'oxygène faiblement liés à la surface et par conséquent le phénomène d'oxydation puis de réduction de la surface du catalyseur, nécessaire dans le cas des réactions d'oxydation et de réduction des gaz, est grandement facilité.

Les catalyseurs selon l'invention sont stables thermiquement, même sous atmosphère légèrement réductrice telle que celle des gaz d'échappement d'automobile.

La substitution d'une quantité faible de manganèse par du platine permet d'éviter l'empoisonnement au soufre et d'augmenter l'activité du catalyseur en ce qui concerne l'oxydation du CO et des hydrocarbures. Le platine n'est pas supporté mais enfermé dans la matrice sous forme de Pt⁴⁺, et ceci de façon homogène grâce à la méthode de préparation employée. Par conséquent, il ne risque ni de se transformer en oxyde volatil, ni de perdre son activité du fait du frittage comme dans le cas des métaux supportés sur alumine.

La substitution d'une quantité faible de manganèse par du ruthénium permet d'obtenir un catalyseur trois voies éliminant, outre le CO et les hydrocarbures, les oxydes d'azote. De la même façon que le platine, le ruthénium étant dans la matrice perovskite ne peut pas disparaître sous forme d'oxyde volatil.

Les phases actives perovskite peuvent être synthétisées de diverses façons. La synthèse par voie sol-gel est particulièrement préférée.

Dans un premier procédé, les terres rares, alcalino-terreux et les métaux de transition autres que les métaux précieux sont introduits sous forme de nitrates dans les proportions désirées (quantités stoechiométriques ou non), puis dissous et mélangés soigneusement dans une solution aqueuse d'acide citrique. Les métaux précieux (Pt et Ru) sont introduits sous forme d'acides hexachloroplatinique ou de chlorure de ruthénium. L'évaporation sous vide de cette solution à 70°C dans un rotavapeur mène à la formation d'un gel. Le gel est ensuite calciné à 450°C, la montée en température devant être lente (5°C/h) afin d'éviter les surchauffes locales pouvant être dues au fait que la formation de l'oxyde est fortement exothermique. Le produit solide obtenu est ensuite broyé, puis recalciné sous air à 600°C pendant 6 heures afin d'obtenir une bonne cristallisation et d'éliminer les éléments organiques restants.

Dans un deuxième procédé, les terres rares, alcalino-terreux, métaux de transition autres que les métaux précieux sont introduits sous forme de nitrates dans les proportions désirées (stoechiométriques ou non) dans une solution d'acide citrique dissous dans de l'éthylène glycol. Les métaux précieux sont introduits sous forme d'acide hexachloroplatinique et de chlorure de ruthénium. L'ensemble, après homogénéisation, est porté à une température de l'ordre de 250°C, cette étape permettant l'élimination d'une grande partie des nitrates et des composés organiques. Le produit solide obtenu est ensuite calciné une première fois à 450°C, puis à 600°C, pendant 6 heures.

Dans les deux procédés, la température de la seconde calcination est critique. Si elle est inférieure à 600°C, le composé recherché n'est pas formé. Si elle est supérieure à 600°C, un début de frittage se produit, et la surface spécifique du composé diminue, entraînant une diminution des performances du catalyseur.

L'utilisation de ces procédés permet d'obtenir des surfaces spécifiques plus élevées qu'avec des méthodes du type mélange d'oxydes ou d'acétates.

Le catalyseur peut être utilisé sous forme d'extrudés ou bien déposé sur un nid d'abeille constitué d'un matériau réfractaire tel que la cordiérite. Une méthode d'imprégnation permettant une bonne homogénéité du dépôt ayant une épaisseur de l'ordre de 20 à 30 µm consiste, après avoir synthétisé la phase active, à former une boue par broyage en phase humide dans un broyeur planétaire pendant 12 heures. Le support est alors immergé dans la suspension, puis égoutté. Un courant d'air comprimé permet d'éviter le bouchage des canaux. L'ensemble est ensuite calciné à une température de l'ordre de 600°C. Le catalyseur final est obtenu à l'issue d'une étape d'imprégnation unique contrairement aux catalyseurs constitués de métaux précieux déposés sur alumine qui nécessite une étape d'imprégnation par composant.

La présente invention se distingue par le fait que compte-tenu de l'épuisement des mines de platine et du coût des métaux précieux, les catalyseurs ne contiennent que très peu ou pas de métaux précieux.

La présente invention est décrite plus en détails à l'aide des exemples suivants donnés à titre illustratif, mais non limitatif.

Les exemples 1 à 3 illustrent l'effet des catalyseurs selon l'invention sur les gaz d'échappement de moteur à essence. Les essais ont été effectués dans les conditions suivantes :
- le catalyseur est sous forme d'extrudés de 2 mm de diamètre et de 2 mm de longueur.
- le gaz a la composition suivante :
   H₂O = 10%
   CO₂ = 13%
   CO = 1,25%
   C₃H₈ = 400 ppm
   NO = 2000 ppm
   O₂ = 0,75%
   N₂ = 74,76%
- VVH = 100 000 hr⁻¹

### EXEMPLE 1

Dans cet exemple sont données les performances de catalyseurs d'oxydation de formule générale :

La_{0,8}Sr_{0,2}Mn_{y}Pt_{z}Φ_{1-y-z}0₃

Les catalyseurs ont été prépares suivant le second procédé cité précédemment. Dans le tableau I sont données les valeurs des températures nécessaires pour convertir 50% et 98% du CO et des hydrocarbures (HC) présents dans le gaz. A titre de comparaison les performances d'un catalyseur constitué de platine sur des billes d'alumine (0,3% en masse) sont également données.

**TABLEAU I**

| Catalyseur | | C_{CO50%} | C_{CO98%} | C_{Hc50%} | C_{Hc98%} |
|---|---|---|---|---|---|
| 1 | Pt/Al₂O₃ | 350°C | >550°C | 368°C | 445°C |
| 2 | La_{0.8}Sr_{0.2}MnO₃ | 400°C | >550°C | 365°C | 400°C |
| 3 | La_{0.8}Sr_{0.2}Mn_{0.9}Φ_{0.1}O₃ | 365°C | >550°C | 350°C | 405°C |
| 4 | La_{0.8}Sr_{0.2}Mn_{0.999}Pt_{0.001}O₃ | 332°C | 450°C | 345°C | 371°C |
| 5 | La_{0.8}Sr_{0.2}Mn_{0.9}Pt_{0.008}Φ_{0.092}O₃ | 335°C | 371°C | 329°C | 361°C |

Ces résultats montrent que les meilleurs résultats sont obtenus pour une phase active comportant simultanément une lacune cationique et un métal noble en substitution partielle du manganèse.

### EXEMPLE 2

Get exemple illustre l'action du ruthénium associé à une lacune en substitution cationique de Mn quant à la réduction des NOₓ et l'action du ruthénium associe au platine ou au palladium et à une lacune quant à l'obtention d'un catalyseur trois voies.

Le tableau II donne la composition des catalyseurs testés.

**TABLEAU II**

| Catalyseurs | Composition |
|---|---|
| 2 | La_{0.8}Sr_{0.2}MnO₃ |
| 7 | La_{0.8}Sr_{0.2}Mn_{0.9}Φ_{0.1}O₃ |
| 8 | La_{0.8}Sr_{0.2}Mn_{0.9}Ru_{0.01}Φ_{0.09}O₃ |
| 9 | La_{0.8}Sr_{0.2}Mn_{0.9}Ru_{0.01}Pt_{0.008}Φ_{0.082}O₃ |
| 10 | La_{0.8}Sr_{0.2}Mn_{0.9}Ru_{0.01}Pd_{0.01}Φ_{0.08}O₃ |
| 11 | La_{0.8}Sr_{0.2}Mn_{0.9}Pt_{0.008}Rh_{0.008}Φ_{0.084}O₃ |

Dans le tableau III sont rassemblés les résultats obtenus avec les différents catalyseurs.

**TABLEAU III**

| Catalyseur | C_{C098%} | C_{HC98%} | C_{NO50%} |
|---|---|---|---|
| 2 | >550°C | 400°C | - |
| 7 | >550°C | 405°C | 520°C |
| 8 | 480°C | 400°C | 350°C |
| 9 | 360°C | 360°C | 360°C |
| 10 | 370°C | 350°C | 345°C |
| 11 | 470°C | 430°C | 365°C |

Il apparaît nettement que l'introduction de ruthénium dans la matrice permet la réduction des NOₓ, et la substitution simultanée de ruthénium et de platine et d'une lacune cationique ou de ruthénium et de palladium ou de rhodium et platine et d'une lacune cationique permet d'obtenir un catalyseur trois voies.

Les résultats sur les catalyseurs 7 et 9 montrent que le catalyseur présentant de très faibles quantités de métal du groupe platine associé à une lacune cationique en site B du groupe platine présente de meilleures performances que celui n'ayant pas de lacune.

### EXEMPLE 3

Dans cet exemple sont données les températures d'amorçage de quelques catalyseurs.

**TABLEAU IV**

| Catalyseur | CO | Hc | NO |
|---|---|---|---|
| Pt/Al₂O₃ | 200°C | 200°C | - |
| La_{0.8}Sr_{0.2}Mn_{0.9}Pt_{0.008}d_{0.092}O₃ | 150°C | 150°C | - |
| La_{0.8}Sr_{0.2}Mn_{0.9}Pt_{0.008}d_{0.092}O₃* | 150°C | 200°C | - |
| La_{0.8}Sr_{0.2}Mn_{0.99}Pt_{0.01}O₃ | 183°C | 183°C | - |
| La_{0.8}Sr_{0.2}Mn_{0.99}Pt_{0.01}O₃* | 312°C | 232°C | - |
| La_{0.8}Sr_{0.2}Mn_{0.9}Ru_{0.01}Pt_{0.008}d_{0.082}O₃ | 150°C | 150°C | - |
| La_{0.8}Sr_{0.2}Mn_{0.9}Ru_{0.01}Pt_{0.008}d_{0.082}O₃* | 160°C | 200°C | - |
| La_{0.8}Sr_{0.2}Mn_{0.9}Pt_{0.008}Rh_{0.008}d_{0.084}O₃ | 130°C | 230°C | 230°C |

| | | | |
|---|---|---|---|
| *: Catalyseurs vieillis thermiquement à 900°C pendant 5 heures sous air | | | |

Il apparaît que les températures d'amorçage sont du même ordre de grandeur ou meilleures que celles obtenues avec un catalyseur du type métaux supportés et ceci que le catalyseur soit vieilli thermiquement ou non.

Les meilleurs résultats en ce qui concerne les températures d'amorçage des réactions d'oxydation du CO et des hydrocarbures sont obtenus avec des catalyseurs contenant à la fois des métaux nobles et des lacunes cationiques.

### Exemple 4 : Combustion de suies

Des mesures ont été effectuées sur des suies synthétiques contenant 70% en poids de noir de carbone, 15% de gas-oil et 15% d'huile moteur. Des analyses thermiques différentielles (ATD) sur les suies seules et sur les suies intimement mélangées au catalyseur testé (dans un rapport suies/catalyseurs de 15% en masse) ont été effectuées. L'analyse des courbes obtenues montre l'existence de deux pics de combustion.

Le tableau suivant donne les températures T₁ et T₂ correspondant respectivement au sommet du 1er et du 2ème pic de combustion, et la température T₃ de fin de combustion.

| | T₁ | T₂ | T₃ |
|---|---|---|---|
| sans catalyseur | 350 | 670 | 720 |
| La_{0.8}Sr_{0.2}MnO₃ | 375 | 480 | 660 |
| La_{0.8}Sr_{0.2}Mn_{0.91}d_{0.09}O₃ | 275 | 460 | 580 |

Le tableau fait apparaître que le catalyseur sans métaux précieux est plus actif si la molécule présente une lacune cationique en site B.

### EXEMPLE 5

| | T₁ | T₂ | T₃ |
|---|---|---|---|
| sans catalyseur | 350 | 670 | 720 |
| La_{0.8}Sr_{0.2}Mn_{0.999}Pt_{0.001}O₃ | 295 | 485 | 660 |

## Revendications

1. Catalyseurs pour le traitement des gaz d'échappement contenant de la suie de moteurs diesel, caractérisés en ce que sa phase active du type perovskite répond à la formule générale :
La_{0,8} Sr_{0,2} Mn_{y} M'_{z} Φ_{1-y-z} O₃ (I)
dans laquelle :
M' représente au moins un métal choisi parmi Pt, Ru, Pd ou Rh,
Φ représente une lacune cationique, et
0,85 < y ≤ 1; 0 ≤ z < 0,08, avec 0,85 < y + z ≤ 1

2. Catalyseurs selon la revendication 1, caractérisés en ce que leur phase active répond à l'une des formules suivantes :
La_{0,8} Sr_{0,2} Mn_{0,9} Ru_{0,008} Φ_{0,092} O₃
La_{0,8} Sr_{0,2} Mn_{0,91} Φ_{0,09} O₃
La_{0,8} Sr_{0,2} Mn O₃
La_{0,8} Sr_{0,2} Mn_{0,999} Pt_{0,001} O₃
La_{0,8} Sr_{0,2} Mn_{0,9} Pt_{0,008} Φ_{0,092} O₃
La_{0,8} Sr_{0,2} Mn_{0,998} Pt_{0,001} Rh_{0,001} O₃

3. Catalyseurs selon l'une des revendications 1 et 2, caractérisés en ce que leur phase active est déposée sur un support, en particulier un support en nid d'abeilles constitué d'un matériau réfractaire ou métallique.

4. Utilisation d'un catalyseur selon l'une des revendications 1 à 3 pour le traitement des gaz d'échappement contenant de la suie de moteurs diesel.

## Claims

1. Catalysts for the treatment of diesel engine exhaust gases containing soot characterised in that its active phase of the perovskite type has the general formula:
La_{0.8} Sr_{0.2} Mn_{y} M'z Φ_{1-y-z}O₃ (I)
in which:
M' represents at least one metal selected from Pt, Ru, Pd, Rh,
Φ represents a cation lacuna, and
0.85 < y ≤ 1; 0 ≤ z < 0.08, with 0.85 < y + z ≤ 1.

2. Catalysts according to claim 1 characterised in that their active phase has one of the following formulae:
La_{0.8}Sr_{0.2}Mn_{0.9}Ru_{0.008}Φ_{0.092}O₃
La_{0.8}Sr_{0.2}Mn_{0.91}Φ_{0.09}O₃
La_{0.8}Sr_{0.2}MnO₃
La_{0.8}Sr_{0.2}Mn_{0.999}Pt_{0.001}O₃
La_{0.8}Sr_{0.2}Mn_{0.9}Pt_{0.008}Φ_{0.092}O₃
a_{0.8}Sr_{0.2}Mn_{0.998}Pt_{0.001}Rh_{0.001}O₃

3. Catalysts according to claim 1 or claim 2 characterised in that their active phase is deposited on a support, in particular a honeycomb support made from a refractory material or metal.

4. Use of a catalyst according to any one of claims 1 to 3 for the treatment of diesel engine exhaust gases containing soot.

## Patentansprüche

1. Katalysatoren für die Behandlung von Auspuff- oder Abgasen, die Ruß von Dieselmotoren enthalten, dadurch gekennzeichnet, daß ihre aktive Phase vom Perowskit-Typ der allgemeinen Formel:
La_{0,8}Sr_{0,2}Mn_{y}M'₂Φ_{1-y-z}O₃ (I)
entspricht, in der:
M' mindestens ein Metall darstellt, das aus Pt, Ru, Pd oder Rh ausgewählt ist,
Φ ein kationisches Loch darstellt und
0,85 < y ≤ 1; 0 ≤ z < 0,08, mit 0,85 < y + z ≤ 1.

2. Katalysatoren nach Anspruch 1, dadurch gekennzeichnet, daß ihre aktive Phase einer der folgenden Formeln entspricht:
La_{0,8}Sr_{0,2}Mn_{0,9}Ru_{0,008}Φ_{0,092}O₃
La_{0,8}Sr_{0,2}Mn_{0,91}Φ_{0,09}O₃
La_{0,8}Sr_{0,2}MnO₃
La_{0,8}Sr_{0,2}Mn_{0,999}Pt_{0,001}O₃
La_{0,8}Sr_{0,2}Mn_{0,9}Pt_{0,008}Φ_{0,092}O₃
La_{0,8}Sr_{0,2}Mn_{0,998}Pt_{0,001}Rh_{0,001}O₃.

3. Katalysatoren nach einem der Ansprüche 1 und 2, dadurch gekennzeichnet, daß ihre aktive Phase auf einem Träger abgeschieden ist, insbesondere einem Honigwaben-Träger, der aus einem hitzebeständigen oder metallischen Material besteht.

4. Verwendung eines Katalysators nach einem der Ansprüche 1 bis 3 für die Behandlung von Auspuff- oder Abgasen, die Ruß aus Dieselmotoren enthalten.
